# EUROPEAN PATENT SPECIFICATION

(11) **EP 0 344 971 B1**
(45) Date of publication and mention of the grant of the patent: **01.12.1993**
(21) Application number: 89305291.0
(22) Date of filing: 25.05.1989
(51) Int. Cl.: C08J 3/03

(54) **Method of preparing a substantially oil-free aqueous emulsion of high softening point hydrocarbon resins**
Verfahren zur Herstellung einer im wesentlichen ölfreien wässrigen Emulsion eines Kohlenwasserstoffharzes mit einem hohen Erweichungspunkt
Procédé de préparation d'emulsion aqueuse essentiellement exempte d'huile de résines d'hydrocarbure à point de ramollissement élevé

(30) Priority: 31.05.1988 US 200388
(43) Date of publication of application: 06.12.1989
(73) Proprietor: EXXON CHEMICAL PATENTS INC., Florham Park New Jersey 07932 (US)
(72) Inventor: Murphy, Ray Francis, Baton Rouge, La. 70820 (US); Jagisch, Frank Carl, Baton Rouge Louisiana 70816 (US); Evans, Morris Lee, Murfreesboro N. Carolina 27855 (US); English, Michael Francis, Bridgewater New Jersey 08807 (US); Protulipac, James John, Katy Texas 77450 (US)
(74) Representative: Veldhuizen, Albert Dirk Willem

(56) References cited:
- EP-A- 0 085 471
- EP-A- 4 579 897
- US-A- 4 579 897
- PATENT ABSTRACTS OF JAPAN, vol. 4, no. 54 (C-8)[536], 2rd April 1980; & JP-A-55 025 443 (KINDAI KAGAKU KOGYO K.K.) 23-02-1980

## Description

The present invention is particularly adapted for preparing aqueous resin emulsions from difficult to emulsify, relatively high softening point, non-polar hydrocarbon resins at elevated temperatures and pressures.

Aqueous resin emulsions find utility, for example, in adhesives, sealants, saturants or coatings for paper or cloth, and as sizing or binding materials in paper pulp. Important properties of such emulsions include shelf stability, particle size, uniformity, solids level, processing characteristics and compatibility with a wide range of formulating ingredients.

The formation of synthetic resin emulsions by emulsion polymerization is well known in the art. The prior art teaches that stable aqueous resin emulsions may be formed by the addition of a resin monomer, a dispersing agent and a catalyst to water and agitating the resulting mixture for an appropriate time.

Aqueous emulsions of resins produced by techniques other than emulsion polymerization require that a bulk polymer be dispersed in water. Hydrocarbon resins with high softening points (i.e., above about 85°C) are, however, difficult to emulsify in water because the emulsification procedures are generally carried out at temperatures at least about 15°C to about 20°C above the resin softening point which is above the boiling point of water at atmospheric pressures.

These high softening point hydrocarbon resins include, but are not limited to, thermoplastic resins obtained by polymerization, in the presence of a catalyst of the Friedel-Crafts type, of steam cracked petroleum distillates, boiling in the range between 30°C and 280°C, or any fraction of these distillates boiling within such range, or of mixtures of olefins and diolefins containing sufficient diolefins to obtain a resin and not an oil. The polymerization is usually performed at temperatures ranging from 0°C to 70°C, more preferably from 30°C to 55°C. The hydrocarbon resins so produced are polydienic in character and generally have ring and ball softening points of from about 38°C to about 180°C.

Since these resins are solid at room temperature, numerous approaches have been utilized to produce aqueous emulsions of such resins. One approach is to solvate the resin in a hydrocarbon solvent then combine the resulting solution with water. Invariably, some residual hydrocarbon solvent remains in the finished emulsion, which is highly undesirable for many applications. This led to the development of solvent-free dispersions (see U. S. Pat. No. 2,809,948) and emulsions (see U. S. Pat. No. 3,377,298) of hydrocarbon resins. In both of these formulations, ionic emulsifiers are utilized. The former patent teaches the use of a mixture of cationic and non-ionic surface active agents to achieve a resin dispersion. The latter patent teaches the use of an ionic surfactant in combination with an aqueous gel of a swelling earth to produce an emulsion paste.

Hydrocarbon resin emulsions containing substantial amounts of plasticizers and/or diluents such as, for example, linseed oil, waxes and paraffins are taught in French Pat. No. 1,452,875 and German Offen. No. 2,014,652, respectively. The use of such large percentages of plasticizers and/or diluents, however, can materially modify, not always favorably, the properties of the base resin.

JP-A-55-025 443 addresses a process for the production of an aqueous emulsion for a specified hydrocarbon resin comprising the step of dissolving the hydrocarbon resin in a water-insoluble organic solvent, the step of pre-liminary-emulsification by adding a surface active agent, stirring the solvent solution with water at 20°C. to 80°C.,the step of high pressure emulsification and subsequent removal of solvent. In an alternate embodiment, the preliminary emulsification step can be done separately without solvent by stirring the raw material with water at a temperature of 100-200°C. and pressure 0.5-15 kg/cm², followed by high pressure direct emulsion.

EP-A-085-471 and corresponding U.S. Patent Nos. 4,414,346, 4,486,563 and 4,487,873 teach aqueous resin emulsions and phase inversion processes for producing such emulsions. The emulsions are produced by agitating a mixture of hydrocarbon resins, resinplasts and emulsifiers at a temperature of about 120°C, slowly adding water at a temperature of about 100°C while continuing to agitate the mixture until the mixture inverts from a "water-in-oil" phase to an "oil-in-water" phase, then cooling the mixture. The process is generally carried out at atmospheric pressure.

Emulsion pressure sensitive adhesives desirably should be comprised of aqueous emulsions of tackifying resins, i.e., resins which enhance the adhesive properties of an emulsion polymer system used as an adhesive. It is highly desirable that additives for properties other than tack or adhesion enhancement such as, for example, plasticizers, resinplasts and/or other diluents, emulsifiers, stabilizers, etc., be kept to an absolute minimum. Such materials often have an adverse effect on the functional properties contributed by the resin such as tack and specific adhesion. Each of the above-described emulsions and processes, however, require the presence of such potentially detrimental additives.

### Summary of the Invention

The present invention, therefore, provides a method of preparing highly functional, relatively high softening point (above about 85°C), non-polar, substantially oil-free hydrocarbon resin emulsions which utilize a minimum of solvents, plasticizers, resinplasts, diluents or other additives required in prior art emulsification processes. As previously mentioned, these additives are potentially deleterious to the emulsion end-use.

The present invention also provides a pressure emulsion preparation method of an inversion type for hydrocarbon resins which effectively produces emulsions of small particle size and exceptional stability.

The present invention further provides aqueous resin emulsions of high shelf life and mechanical stability.

The present invention finally provides hydrocarbon resins in the form of a latex-like dispersion for application in pressure sensitive adhesives, as a saturant or coating for paper or cloth, or as a sizing or binding material in paper pulp.

In accordance with the present invention, there is provided a method for producing a substantially oil-free aqueous emulsion of a high softening point hydrocarbon resin, comprising the steps of:
° admixing from 90 to 97 parts by weight of a hydrocarbon resin that has a softening point above 85°C, with from 3 to 10 parts by weight of an emulsifier at a temperature of between 5°C to 30°C above the softening point of said resin to produce a blend;
° adding heated water at a temperature of from 100°C to 125°C to said blend under superatmospheric pressure and vigorous agitation until a phase inversion occurs from a water-in-resin emulsion to an resin-in-water emulsion; and
° adding ambient temperature water to said resin-in-water emulsion under agitation until said emulsion comprises a water content of from 30% to 75% by weight based upon the weight of said emulsion.

Other non-reactive additives such as, for example, pigments, dyes, labeling agents. stabilizers and biocides, may optionally be present in aqueous resin emulsions of the present invention.

The substantially oil-free aqueous resin emulsions of the present invention are produced by a process which, in its overall concept, comprises the steps of admixing from 90 to 97, more preferably from 93 to 97, parts by weight of the resin with from 3 to 10, more preferably from 3 to 7, parts by weight of an emulsifier at elevated temperatures to produce a blend. Heated water is then slowly added to this blend at superatmospheric pressures under vigorous agitation until a phase inversion occurs from a "water-in-resin" phase to "resin-in-water" phase. Upon phase inversion, ambient temperature water is added to cool the resulting emulsion, the water addition continuing until the desired water content is reached. The resulting aqueous resin emulsions may be filtered and transported to storage for ultimate use.

The aqueous resin emulsions so produced contain a minimum of ingredients incidental to the emulsion end use. These emulsions exhibit a small particle size, good uniformity and stability and good compatibility with other formulating ingredients, and can be designed for high solids content to minimize the expense of transporting water when these emulsions are packaged.

These and other features and advantages of the present invention will be more readily understood by those skilled in the art from a reading of the following detailed description.

### Detailed Description of the Preferred Embodiments

As previously indicated, the present invention provides a method for the production of substantially oil-free aqueous resin emulsions and methods of producing the same. The present invention is particularly adapted for producing aqueous resin emulsions from high softening point, non-polar hydrocarbon resins which are generally difficult to emulsify in aqueous media due, in part, to their high softening points.

The hydrocarbon resins emulsified according to the present invention are preferably hydrocarbon resins prepared by (co)polymerization of olefins, diolefins and/or aromatic components, predominantly C₅ to C₉ species, from distillates of cracked petroleum stocks. A Friedel-Crafts catalyst is typically employed. The resulting resin has an aliphatic, aromatic or mixed aliphatic/aromatic character with a ring and ball softening point preferably above about 85°C. The methods described herein can also be used to emulsify lower softening point resins of similar character, but it is the higher softening point resins which are more difficult to emulsify and are thus primarily addressed here.

More specifically, these hydrocarbon resins may be prepared by polymerizing petroleum cracked distillates boiling in the range of from 30°C to 280°C or any fraction boiling within this range. Generally these distillates are comprised of olefinic, diolefinic and/or aromatic components. The distillates are treated with from 0.25 to 2.5% by weight of a Friedel-Crafts type catalyst such as, for example, aluminum chloride, aluminum bromide, boron trifluoride and the like, or solutions, slurries or complexes thereof, and the (co)polymerization reactions are carried out at temperatures ranging from 0°C to 70°C, more preferably from about 30°C to about 55°C. Residual catalyst is quenched by suitable methods known to those skilled in the art such as, for example, addition of methyl alcohol and subsequent filtration, water and/or caustic washing. The final solution is then stripped of unreacted hydrocarbons and low molecular weight oils by vacuum or steam distillation.

In place of the petroleum cracked distillates, the feed to polymerization may comprise mixtures of a diolefin with an olefin. Sufficient diolefin must be present and incorporated in the polymer to give a resin having a suitably high melting point instead of an oil.

Especially preferred hydrocarbon resins useful in the practice of the present invention include Escorez® 1310LC, a petroleum hydrocarbon (aliphatic) resin having a softening point of from 91°C to 97°C, and Escorez® 2393, a petroleum hydrocarbon (aromatic/aliphatic) resin having a softening point of from 90°C to 96°C. Such resins are produced in accordance with the methods described in U.S. Patent Nos. 4,391,961 and 4,684,707, and commercially sold by Exxon Chemical Americas of Houston, Texas. Another suitable aliphatic resin is Escorez® 1504 tackifier resin. Other suitable examples are Escorez® 7105 and 7312 aromatic tackifier resins. Similarly, cyclopentadiene-based tackifier resins such as the Escorez® 5000 family of hydrogenated resins may be emulsified by the process of the present invention.

In the methods of the present invention, as further described below, from 90 to 97 parts by weight, more preferably from 93 to 97 parts by weight, of the hydrocarbon resin is admixed with from 3 to 10 parts by weight, more preferably from 3 to 7 parts by weight, of an emulsifier to produce a blend which is subsequently utilized in producing the aqueous resin emulsions of the present invention.

Emulsifiers useful in the practice of the present invention comprise combinations of nonionic emulsifiers with anionic emulsifiers. The nonionic emulsifier, for example, can be an ethoxylated alkyl phenol in which the alkyl group contains from 8 to 12, more preferably 9, carbon atoms. The molar ratio of ethylene oxide to alkylphenol is selected based on the chemistry of the particular resin, and is easily determined by one skilled in the art. A suitable anionic emulsifier is an alkyl aryl sulfonate, generally in the form of an alkali metal salt or alkaline earth metal salt. Highly useful for the practice of this invention is the sodium or calcium salt of dodecylbenzene sulfonic acid. A suitable emulsifier of this type is Atlox® 3404F and variations thereof sold by ICI Americas Inc. Atlox® 3404F is reported to be a blend of polyoxyethylene alkyl aryl ether and alkyl aryl sulfonate.

Another type of emulsifier useful in the practice of the present invention is termed a rosinate, more specifically a sodium or potassium soap of a rosin acid. Rosin acids are natural products from gum, wood and tall oils, and may be refined by processes such as hydrogenation or disproportionation. The rosinates may be admixed with the hydrocarbon resins or may be prepared in-situ by admixing a rosin acid with the resin and adding NaOH and/or KOH to the admixture at an elevated temperature, preferably about 100 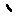 C. An especially preferred rosin acid is Galex W-100 sold by NatroChem, Inc. of Savannah, Georgia. Galex W-100 is reported to be a disproportionated rosin acid principally comprising dehydroabietic acid, with an acid number of 156-167 mg KOH/g and a ring and ball softening point of 64-70°C.

Variation of the emulsifier type may affect the amount of emulsifier needed, the emulsification process and the properties of the ultimate emulsion, as will be recognized by one skilled in the art.

The preferred method is described hereafter.

To prepare the aforementioned blends, the hydrocarbon resin is added to a mixer, the mixer being provided with a steam jacket or other heat exchange means for adjusting and controlling the temperature within the mixer and an agitator for agitating the admixtures within the mixer.

The impeller design of the agitator should maximize the portion of the mixing energy dissipation into the emulsion which is classified as shear. Various turbine impellers such as flat blade and disk type flat blade turbines and high shear, commercially or specially designed impellers such as the Fawcett mixed flow impeller are suitable. These and other suitable impellers are well-known to those skilled in the art.

The hydrocarbon resin is preferably added to the mixer in molten form, but may also be added to the mixer as a solid and melted therein. The molten resin is agitated within the mixer and maintained at a temperature of between 5°C to 30°C, more preferably between 10°C to 20°C, above its softening point. Of course, the actual temperature within these ranges will ultimately depend upon the resin melt viscosity which is readily determinable by those skilled in the art. For the particular examples of Escorez® 1310LC and Escorez® 2393, as described above, the molten resin is maintained at a temperature of between 100° C to 125°C, more preferably between 105°C to 120°C.

Once the resin is in a molten state and at the desired temperature, the emulsifier is added and the resin and emulsifier agitated and admixed thoroughly to produce the blend. This step may be carried out at any pressure as desired. Other non-reactive additives may optionally be added to the resin/emulsifier blend for a variety of purposes such as, for example, pigments, dyes, labeling agents, stabilizers and biocides. The use of these additives, however, is optional and is not to be considered restrictive of the present invention.

The resulting blend will, therefore, comprise from 90 to 97, more preferably from 93 to 97, parts by weight hydrocarbon resin and from 3 to 10, more preferably from 3 to 7, parts by weight emulsifier. The blend will also preferably have a ring and ball softening point of at least 85°C up to 140°C, and a 95°C melt viscosity of between 20 and 60 Pa s (20,000 and 60,000 centipoise).

To produce the aqueous resin emulsions of the present invention, this blend, if not already under pressure, is first subjected to elevated pressures of from superatmospheric up to 620 kPa (90 psig) more preferably up to 517 kPa (75 psig) depending upon the particular resin chosen. As agitation of the blend continues, the temperature of the blend is maintained at a temperature of from 5°C to 30°C, more preferably between about 10°C to about 20°C, above its ring and ball softening point.

Water, preferably deionized and heated to a temperature of between 100°C to 125°C, is slowly added to the blend, under the aforementioned pressure conditions, at a rate of between 0.5% and 2%, more preferably about 1%, by weight per minute based upon the weight of the blend. During the water addition, the mixture is preferably subjected to vigorous, high shear agitation. The amount of agitation will generally range from 0.30 to 49.3 W/ℓ (15 to 250 horsepower per 1000 gallons) of mixing vessel capacity, although for smaller capacity mixing vessels this number may increase considerably.

The water is initially dispersed in the blend to form a "water-in-resin" emulsion. Upon continued addition of water, however, the emulsion will invert to an "resin-in-water emulsion. When phase inversion is reached, the heated water addition is stopped and the agitation of the emulsion maintained but lowered in intensity.

Ambient temperature water, preferably between 0°C to 50°C, is then added to the emulsion to cool and "quench" the batch to prevent particle growth. The ambient temperature water is preferably added at a rate of between 5% to 15%, more preferably 10%, by weight per minute based upon the weight of the blend until the final water content of the emulsion is preferably between from 30% to 75%, more preferably from 35% to 60%, most preferably from 40% to 50%, by weight based upon the total weight of the emulsion. The remaining content of the emulsion, i.e. , the substantially oil-free non-water part, will comprise the blend which, as previously mentioned, comprises from 90 to 97, more preferably from 93 to 97, parts by weight hydrocarbon resin and from 3 to 10, more preferably from 3 to 7, parts by weight emulsifier.

The finished emulsion is then typically strained using cheese cloth or a commercial filter bag or filter pack and transported to storage. Other non-reactive additives may, at this point, optionally be added to the emulsion for a variety of purposes such as, for example, pigments, dyes, labeling agents, stabilizers and biocides. The use of these additives, however, is optional and should not be considered restrictive of the present invention.

The aqueous emulsions so produced will typically be slightly off-white in color, smooth to the touch, have a solids level of between 50 wt% to 60 wt%, an average particle size of less than 0.5 µm (microns) and a viscosity of about 0.25 - 1.4 Pa s (250 - 1400 centipoise). Shelf stability often exceeds several months.

In the methods detailed above, there appear to be certain aspects to these procedures which are important to achieve small particle size and high stability desired in the aqueous resin emulsions. The formation of the blend, as previously indicated, involves the heating of the resin to a molten state and admixture with the emulsifier. The blend must be admixed thoroughly to assure homogeneity.

Upon heated water addition to the blend, the temperature of the blend may tend to be reduced depending upon the temperature of the added water. The blend temperature, however, should be maintained above the softening point of the blend, as previously discussed, at all times prior to phase inversion.

Further, during the initial heated water addition when the "water-in-resin" emulsion is being formed, vigorous shear agitation should be maintained to ensure that the blend surface is continuously agitated and folded into the mix.

When approximately 1/10 to 1/3 of the water addition is complete, it is highly desirable to terminate water addition for from 5 to 60 minutes while continuing the vigorous agitation. The time interval from first water addition to inversion should be governed by short lapses in water addition in this manner. This technique can also serve to maintain the temperature of the blend.

The time interval from first water addition to the point of emulsion phase inversion (from the "water-in-resin" to the "resin-in-water" phase) can be important. For a given resin there is a mix time minimum, below which final resin emulsion particle size will be undesirably large. This critical mix time is also dependent upon the power input to the agitator per unit volume of emulsion. Power input is directly related to impeller diameter and impeller rotational speed. This mix time interval can vary widely. It is well within the skill of the art to determine this mix time interval and agitation requirement based upon a particular resin.

Following phase inversion, the vigorous agitation should be reduced to a milder agitation to minimize foam. Batch heating is terminated. As previously mentioned, water is added to the emulsion at ambient temperature to reduce the emulsion temperature. Water addition is continued until the desired water content is obtained. The mild agitation is continued after completion of the water addition until the desired final temperature is reached. Prior to terminating the agitation and transferring the emulsion to storage, the emulsion temperature should be reduced to a temperature of at least about 20°C below the softening point of the emulsion in order to prevent particle size growth or skin development in the emulsion system.

The foregoing more general discussion of the present invention will be further exemplified by the following specific examples offered by way of illustration and not as a limitation of the above-described invention.

### EXAMPLES

### Examples 1-4

10.1 kg (22.4 pounds) of Escorez®, 1310LC, as described above, 528 grams of Galex W-100, as also described above, 66.77 grams of 50% NaOH and 103.84 grams of 45% KOH were fed to a 10 gallon closed mixing vessel containing a 1.49 kW (2 HP) variable speed mixer with 3 pitched bladed turbines and 4 baffles extending from the vessel walls. The vessel was purged, then pressurized with nitrogen to 344.5 kPa (50 psig). These components were then heated to a specified temperature (Blend Temp. - Table I) and agitated at a specified impeller speed (RPM - Table I) for about 1 hour.

Heated deionized water (Water Temp. - Table I) was then added to the blend at a rate of 32.3 grams/minute until the solids content was reduced to 85% by weight. The water and blend were allowed to mix for about 15 minutes, then additional heated water was added at a rate of 70 grams/minute until the solids content was reduced to 75% by weight. The water addition rate was then increased to 117 grams/minute until the solids content was reduced to 65% by weight. During this heated water addition, the impeller speed was maintained.

The emulsion was then cooled by turning off the heat to the mixer and adding ambient temperature water at a rate of 1 pound/minute until the solids content was reduced to 55%. At this time the impeller speed was reduced to 150 rpm. The batch was allowed to cool to 50 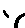 C, then the mixer was slowly depressurized and the emulsion drained from the mixer.

The average particle size and centrifuge separation (10 cm tube, 2500 RPM, 30 minutes in an IEC Model HN-SII centrifuge) data are presented below in Table I.

### Examples 5-10

The above procedure was repeated except that 10.1 kg (22.4 pounds) of Escorez® 1310LC, 482 grams of Galex W-100 and 190.5 grams of 45% KOH were utilized.

The average particle size and centrifuge separation data are presented below in Table I.

### Example 11

The above procedure was repeated except that 10.1 kg (22.4 pounds) of Escorez® 1310LC and 780 grams of Atlox® 3404F emulsifier, as described above, were utilized.

The average particle size and centrifuge separation data are presented below in Table I.

### Example 12

The above procedure was repeated except that 10.1 kg (22.4 pounds) of Escorez® 1310LC and 1017 grams of Atlox® 3404F emulsifier were utilized.

The average particle size and centrifuge separation data are presented below in Table I.

**TABLE I**

| Exa. | BlendTemp. (°C) | WaterTemp. (°C) | RPM | Part.Size (nm) | Centrifuge Separation |
|---|---|---|---|---|---|
| 1 | 118 | 124 | 500 | 246 | None |
| 2 | 115 | 125 | 500 | 244 | None |
| 3 | 113 | 116 | 500 | 266 | None |
| 4 | 110 | 114 | 500 | 246 | None |
| 5 | 117 | 122 | 500 | 264 | None |
| 6 | 117 | 122 | 400 | 441 | 8 mm |
| 7 | 108 | 108 | 400 | 256 | None |
| 8 | 105 | 129 | 350 | 511 | 8 mm |
| 9 | 106 | 113 | 300 | 590 | 6 mm |
| 10 | 118 | 124 | 250 | 744 | 7 mm |
| 11 | 110-125 | --- | 500 | 1070 | >10 mm |
| 12 | 122-124 | --- | 500 | 444 | 2 mm |

These results show that high softening point (above 85°C) hydrocarbon resins can successfully be made into aqueous emulsions by the process of the present invention while eliminating the need for potentially deleterious oils, solvents and the like. The only required additive is a minor amount of an emulsifier, which does not substantially affect the desired end-use properties of the final emulsion.

These results also show that emulsions can be produced by the process of the present invention which possess a relatively small average particle size and are extremely stable (do not separate).

## Claims

1. A method for producing a substantially oil-free aqueous emulsion of a high softening point hydrocarbon resin, comprising the steps of:
° admixing from 90 to 97 parts by weight of a hydrocarbon resin that has a softening point above 85°C, with from 3 to 10 parts by weight of an emulsifier at a temperature of between 5°C to 30°C above the softening point of said resin to produce a blend;
° adding heated water at a temperature of from 100°C to 125°C to said blend under superatmospheric pressure and vigorous agitation until a phase inversion occurs from a water-in-resin emulsion to an resin-in-water emulsion; and
° adding ambient temperature water to said resin-in-water emulsion under agitation until said emulsion comprises a water content of from 30% to 75% by weight based upon the weight of said emulsion.

2. Method according to claim 1, wherein said emulsifier comprises a nonionic ethoxylated alkyl phenol, an anionic alkyl aryl sulfonate, a rosinate or mixtures of two or more thereof.

3. Method according to any of the preceding claims, wherein from 93 to 97 parts by weight of said hydrocarbon resin are admixed with from 3 to 7 parts by weight of said emulsifier to produce said blend.

4. Method according to any of the preceding claims, wherein said hydrocarbon resin and said emulsifier are admixed at a temperature of between 10°C to 20°C above the softening point of said resin to produce said blend; wherein said heated water is added to said blend at a rate of from 0.5 to 2% by weight per minute based upon the weight of said blend; wherein said heated water is added under superatmospheric pressures up to 620 kPa (90 psig); wherein said ambient temperature water is at a temperature of from 0°C to 50°C and/or wherein said ambient temperature water is added at a rate of from 5% to 15% by weight per minute, based upon the weight of said blend.

5. Method according to any of the preceding claims, wherein said ambient temperature water is added until said emulsion comprises a water content of from 35% to 60% by weight based upon the weight of said emulsion.

6. Method according to any of the preceding claims, wherein said ambient temperature water is added until said emulsion comprises a water content of from 40% to 50% by weight based upon the weight of said emulsion; wherein said heated water is added under vigorous agitation; and/or wherein said ambient water is added under mild agitation.

7. Method according to any of the preceding claims further comprising the step of reducing the emulsion temperature to at least 20°C below the softening point of the resin contained in the said emulsion subsequent to the addition of said ambient temperature water.

## Patentansprüche

1. Verfahren zur Herstellung einer im wesentlichen ölfreien wäßrigen Emulsion eines Kohlenwasserstoffharzes mit einem hohen Erweichungspunkt, bei dem
· 90 bis 97 Gewichtsteile eines Kohlenwasserstoffharzes mit einem Erweichungspunkt oberhalb von 85°C mit 3 bis 10 Gewichtsteilen eines Emulgators bei einer Temperatur von zwischen 5°C und 30°C über dem Erweichungspunkt des Harzes gemischt werden, um eine Mischung zu ergeben;
· erhitztes Wasser mit einer Temperatur von 100°C bis 125°C bei mehr als atmosphärischem Druck und kräftiger Durchmischung zu der Mischung gegeben wird, bis eine Phaseninversion von einer Wasser-in-Harz-Emulsion zu einer Harz-in-Wasser-Emulsion auftritt und
· Wasser mit gemäßigter Temperatur unter Durchmischung zu der Harz-in-Wasser-Emulsion gegeben wird, bis diese Emulsion einen Wassergehalt von 30 Gew.% bis 75 Gew.%, bezogen auf das Gewicht der Emulsion, umfaßt.

2. Verfahren nach Anspruch 1, bei dem der Emulgator ein nichtionisches ethoxyliertes Alkylphenol, ein anionisches Alkylarylsulfonat, ein Salz einer Kolophoniumsäure oder Mischungen aus zwei oder mehreren hiervon umfaßt.

3. Verfahren nach einem der vorhergehenden Ansprüche, bei dem 93 bis 97 Gewichtsteile des Kohlenwasserstoffharzes mit 3 bis 7 Teilen des Emulgators gemischt werden, um die Mischung zu ergeben.

4. Verfahren nach einem der vorhergehenden Ansprüche, bei dem das Kohlenwasserstoffharz und der Emulgator bei einer Temperatur von zwischen 10°C und 20°C oberhalb des Erweichungspunktes des Harzes vermischt werden, um die Mischung zu ergeben; bei dem das erhitzte Wasser mit einer Geschwindigkeit von 0,5 bis 2 Gew.% pro Minute, bezogen auf das Gewicht der Mischung, zu der Mischung gegeben wird; bei dem das erhitzte Wasser bei mehr als atmosphärischen Drücken bis zu 620 kPa (90 psig) zugegeben wird; bei dem das Wasser mit gemäßigter Temperatur eine Temperatur von 0°C bis 50°C hat und/oder bei dem das Wasser mit gemäßigter Temperatur mit einer Geschwindigkeit von 5 Gew.% bis 15 Gew.% pro Minute, bezogen auf das Gewicht der Mischung, zugegeben wird.

5. Verfahren nach einem der vorhergehenden Ansprüche, bei dem das Wasser mit gemäßigter Temperatur zugegeben wird, bis die Emulsion einen Wassergehalt von 35 Gew.% bis 65 Gew.%, bezogen auf das Gewicht der Emulsion, umfaßt.

6. Verfahren nach einem der vorhergehenden Ansprüche, bei dem das Wasser mit gemäßigter Temperatur zugegeben wird, bis die Emulsion einen Wassergehalt von 40 Gew.% bis 50 Gew.%, bezogen auf das Gewicht der Emulsion, umfaßt; bei dem das erhitzte Wasser unter kräftigem Durchmischen zugegeben wird und/oder bei dem das Wasser mit gemäßigter Temperatur unter gelindem Durchmischen zugegeben wird.

7. Verfahren nach einem der vorhergehenden Ansprüche, das außerdem die Stufe umfaßt, in der die Emulsionstemperatur nach der Zugabe des Wassers mit gemäßigter Temperatur auf mindestens 20°C unterhalb des Erweichungspunktes des in der Emulsion enthaltenden Harzes abgekühlt wird.

## Revendications

1. Procédé de production d'une émulsion aqueuse, principalement dépourvue d'huile, d'une résine hydrocarbonée de haut point de ramollissement, qui comprend les étapes consistant :
- à mélanqer 90 à 97 parties en poids d'une résine hydrocarbonée qui a un point de ramollissement au dessus de 85°C avec 3 à 10 parties en poids d'un émulsionnant à une température de 5 à 30°C au dessus du point de ramollissement de ladite résine pour former un mélange ;
- à ajouter de l'eau chauffée, à une température de 100 à 125°C, audit mélange à une pression supérieure à la pression atmosphérique en agitant énergiquement jusqu'à ce qu'une inversion de phase ait lieu avec passage d'une émulsion eau-dans-résine à une émulsion résine-dans-eau ; et
- à ajouter de l'eau à la température ambiante à ladite émulsion résine-dans-eau sous agitation jusqu'à ce que l'émulsion ait une teneur en eau de 30 à 75 % en poids sur la base du poids de l'émulsion.

2. Procédé suivant la revendication 1, dans lequel l'émulsionnant comprend un alkylphénol éthoxylé non ionique, un alkylarylsulfonate anionique, un résinate ou des mélanges de deux ou plus de deux de ces émulsionnants.

3. Procédé suivant l'une quelconque des revendications précédentes, dans lequel 93 à 97 parties en poids de la résine hydrocarbonée sont mélangés avec 3 à 7 parties en poids de l'émulsionnant pour produire ledit mélange.

4. Procédé suivant l'une quelconque des revendications précédentes, dans lequel la résine hydrocarbonée et l'émulsionnant sont mélangés à une température se trouvant entre 10 et 20°C au dessus du point de ramollissement de la résine pour produire ledit mélange ; l'eau chauffée est ajoutée au mélange à une vitesse de 0,5 à 2 % en poids par minute sur la base du poids du mélange, l'eau chauffée est ajoutée à des pressions supérieures à la pression atmosphérique allant jusqu'à des pressions manométriques de 620 kPa (90 lb/in²), l'eau à la température ambiante se trouve à une température allant de 0 à 50°C et/ou l'eau à la température ambiante est ajoutée à une vitesse de 5 à 15 % en poids par minute, sur la base du poids du mélange.

5. Procédé suivant l'une quelconque des revendications précédentes, dans lequel l'eau à température ambiante est ajoutée jusqu'à ce que l'émulsion ait une teneur en eau de 35 à 60 % en poids sur la base du poids de l'émulsion.

6. Procédé suivant l'une quelconque des revendications précédentes, dans lequel l'eau à la température ambiante est ajoutée jusqu'à ce que l'émulsion ait une teneur en eau de 40 à 50 % en poids sur la base du poids de l'émulsion, l'eau chauffée est ajoutée sous agitation énergique, et/ou l'eau à la température ambiante est ajoutée sous agitation modérée.

7. Procédé suivant l'une quelconque des revendications précédentes, qui comprend en outre l'étape de réduction de la température de l'émulsion jusqu'à au moins 20°C au dessous du point de ramollissement de la résine contenue dans l'émulsion, après l'addition de l'eau à la température ambiante.
